# FASCICULE DE BREVET EUROPEEN

(11) **EP 0 435 738 B1**
(45) Date de publication et mention de la délivrance du brevet: **01.09.1993**
(21) Numéro de dépôt: 90403650.6
(22) Date de dépôt: 18.12.1990
(51) Int. Cl.: B60R 16/02

(54) **Procédé de contrôle d'un réseau de stations électroniques et réseau obtenu, notamment pour véhicules automobiles**
Überwachungsverfahren für ein Netzwerk elektronischer Stationen und erhaltenes Netzwerk, insbesondere für Kraftfahrzeuge
Electronic stations network monitoring procedure and network obtained, especially for motor vehicles

(30) Priorité: 19.12.1989 FR 8916805; 19.12.1989 FR 8916806
(43) Date de publication de la demande: 03.07.1991
(73) Titulaire: JAEGER, F-92303 Levallois-Perret (FR)
(72) Inventeur: Jaux, Tony, F-94300 Vincennes (FR)
(74) Mandataire: Martin, Jean-Jacques

(56) Documents cités:
- EP-A- 0 138 735
- EP-A- 0 276 082
- FR-A- 2 445 769
- FR-A- 2 626 998
- US-A- 4 698 748

## Description

La présente invention concerne un procédé de contrôle d'un réseau de stations électroniques et le réseau ainsi obtenu.

La présente invention s'applique tout particulièrement aux véhicules automobiles.

On sait que les véhicules automobiles modernes sont équipés de nombreuses fonctions ou stations électroniques, dont certaines doivent être susceptibles d'activité lorsque le moteur est à l'arrêt. On peut citer à titre d'exemple, des fonctions de contrôle d'éclairage, de feux anti-brouillard, d'essuie lave glaces, des fonctions de contrôle de niveau, de température, de vitesse, des fonctions ABS, des fonctions de contrôle de suspension, et pour ce qui est des fonctions devant rester susceptibles d'activité lorsque le moteur est à l'arrêt: des fonctions de commande de portes, de feux de détresse, des centrales d'alarme.

L'introduction d'électronique dans l'automobile a conduit l'ISO à proposer une limitation de la consommation électrique lorsque le moteur ne tourne pas, à une valeur de 1mA, ceci afin d'éviter une décharge prématurée de la batterie d'accumulateur du véhicule automobile.

Vu l'état de la technologie, il semble difficile de respecter cette contrainte, en maintenant l'ensemble des fonctions ou stations électroniques sous tension.

Il a donc été proposé de couper l'alimentation de certaines au moins de ces stations lorsque le moteur est à l'arrêt.

Plus précisément, il a été proposé de concevoir les stations électroniques de sorte que celles-ci soient susceptibles d'occuper deux états ou modes de fonctionnement: un mode actif où tous les moyens de la station nécessaires à la mise en oeuvre d'une fonction sont en service, et un mode veille où seule une partie de la station nécessaire pour assurer le réveil de celle-ci reste en service.

Ces propositions ont déjà fait l'objet d'une littérature assez abondante.

A titre d'exemples on citera les documents suivants : FR-A-2508257, FR-A-2578070, FR-A-2626998, FR-A-2627036, FR-A-2627038, FR-A-2627039 et GB-A-2172727.

Les propositions antérieures ne donnent cependant pas totalement satisfaction.

La présente invention a en particulier pour but de proposer un procédé de contrôle d'un réseau de stations électroniques qui assure le passage des stations du mode actif au mode veille, dans des conditions optimales.

Ce but est atteint selon la présente invention grâce à un procédé de contrôle d'un réseau de stations électroniques aptes à générer chacune au moins une fonction, notamment pour véhicules automobiles, caractérisé par le fait qu'il comprend les étapes consistant à :
i) générer au niveau de certaines au moins des stations un signal d'activation lorsqu'une fonction associée précédemment inactive est sollicitée,
ii) générer un signal de désactivation lorsqu'une fonction associée précédemment active est mise au repos,
iii) détecter les signaux d'activation et de désactivation générés,
iv) incrémenter au moins un compteur d'un pas à chaque détection d'un signal d'activation associé au compteur,
v) décrémenter le même compteur d'un pas à chaque détection d'un signal de désactivation associé, et
vi) générer un signal de mise en sommeil lorsqu'un compteur après avoir été décrémenté atteint un compte nul.

Selon une première mise en oeuvre conforme à la présente invention, visant un réseau de stations électroniques aptes à générer chacune au moins une fonction, dans lequel certaines au moins de ces fonctions sont des fonctions dites de réveil, le procédé comprend les étapes consistant à :
a) au niveau de certaines au moins des stations :
   i) générer un signal d'activation lorsqu'une fonction de réveil associée précédemment inactive est sollicitée,
   ii) générer un signal de désactivation lorsqu'une fonction de réveil associée précédemment active est mise au repos,
b) au niveau d'au moins une station de contrôle comprenant un compteur :
   i) détecter les signaux d'activation et de désactivation générés par l'ensemble des stations,
   ii) incrémenter le compteur d'un pas à chaque détection d'un signal d'activation,
   iii) décrémenter le même compteur d'un pas à chaque détection d'un signal de désactivation, et
   iv) générer un signal de mise en sommeil de l'ensemble des stations lorsque le compteur après avoir été décrémenté atteint un compte nul.

Dans le cadre de la présente demande, on entend par "fonction de réveil" toute fonction devant pouvoir être activée lorsque la clé de contact est en position de repos. A titre d'exemples, les fonctions feux de détresse et verrouillage des portes, constituent des fonctions de réveil.

Selon une autre caractéristique avantageuse de la première mise en oeuvre de la présente invention, le procédé de contrôle est caractérisé par le fait qu'une seule station de contrôle du réseau comprend un compteur.

Selon une autre caractéristique avantageuse de la première mise en oeuvre de la présente invention, le procédé de contrôle est caractérisé par le fait que certaines au moins des stations électroniques du réseau sont conçues pour générer au moins une fonction de réveil d'un premier type à durée illimitée nécessitant une intervention d'un opérateur pour l'activer et une intervention de l'opérateur pour la désactiver, et certaines au moins des stations électroniques du réseau sont conçues pour générer au moins une fonction de réveil d'un second type à durée limitée nécessitant une intervention d'un opérateur pour l'activer mais conçue pour être désactivée automatiquement, caractérisé par le fait qu'il comprend les étapes consistant à :
a) au niveau de certaines au moins des stations :
   i) générer un signal d'activation d'un premier type lorsqu'une fonction associée de réveil du premier type à durée illimitée est sollicitée par l'opérateur alors qu'elle était précédemment inactive,
   ii) générer un signal de désactivation lorsqu'une fonction associée de réveil du premier type précédemment active est mise au repos,
   iii) générer un signal d'activation d'un second type lorsqu'une fonction associée de réveil du second type à durée limitée est sollicitée par l'opérateur alors qu'elle était précédemment inactive,
b) au niveau d'au moins une station de contrôle comprenant un compteur et une temporisation :
   i) détecter les signaux d'activation et de désactivation générés par l'ensemble des stations,
   ii) incrémenter le compteur d'un pas à chaque détection d'un signal d'activation du premier type,
   iii) décrémenter le même compteur d'un pas à chaque détection d'un signal de désactivation,
   iv) initialiser la temporisation à chaque détection d'un signal d'activation du second type, et
   v) générer un signal de mise en sommeil de l'ensemble des stations lorsque le compteur contient un compte nul et que simultanément la temporisation n'est pas en cours d'évolution.

Selon une seconde mise en oeuvre conforme à la présente invention, le procédé comprend les étapes consistant, au niveau de chaque station, à :
i) générer un signal d'activation lorsqu'une fonction précédemment inactive, de cette station, est sollicitée,
ii) générer un signal de désactivation lorsqu'une fonction de cette station précédemment active est mise au repos,
iii) détecter les signaux d'activation et de désactivation générés par cette station,
iv) incrémenter un compteur incorporé à cette station d'un pas à chaque détection d'un signal d'activation généré par cette station,
v) décrémenter le même compteur d'un pas à chaque détection d'un signal de désactivation, et
vi) générer un signal de mise en sommeil de cette station lorsque le compteur après avoir été décrémenté atteint un compte nul.

Selon une autre caractéristique avantageuse de la deuxième mise en oeuvre de la présente invention, le procédé de contrôle est caractérisé par le fait que certaines au moins des stations électroniques du réseau sont conçues pour générer au moins une fonction d'un premier type à durée illimitée nécessitant une intervention d'un opérateur pour l'activer et une intervention de l'opérateur pour la désactiver, et au moins une fonction d'un second type à durée limitée nécessitant une intervention d'un opérateur pour l'activer mais conçue pour être désactivée automatiquement, caractérisé par le fait qu'il comprend les étapes consistant au niveau de chacune de ces stations à :
- générer un signal d'activation d'un premier type lorsqu'une fonction du premier type à durée illimitée de cette station est sollicitée par l'opérateur alors qu'elle était précédemment inactive,
- générer un signal de désactivation lorsqu'une fonction du premier type précédemment active de cette station est mise au repos,
- générer un signal d'activation d'un second type lorsqu'une fonction du second type à durée limitée de cette station est sollicitée par l'opérateur alors qu'elle était précédemment inactive,
- détecter les signaux d'activation et de désactivation générés par cette station,
- incrémenter un compteur incorporé à cette station d'un pas à chaque détection d'un signal d'activation du premier type généré par cette station,
- décrémenter le même compteur d'un pas à chaque détection d'un signal de désactivation généré par cette station,
- initialiser une temporisation incorporée à cette station à chaque détection d'un signal d'activation du second type généré par cette station, et
- générer un signal de mise en sommeil de cette station lorsque le compteur contient un compte nul et que simultanément la temporisation n'est pas en cours d'évolution.

La présente invention concerne également un réseau de stations électroniques aptes à générer chacune au moins une fonction, notamment pour véhicules automobiles, comprenant au niveau de certaines au moins des stations :
- des moyens aptes à générer un signal d'activation lorsqu'une fonction associée précédemment inactive est sollicitée,
- des moyens conçus pour générer un signal de désactivation lorsqu'une fonction associée précédemment active est mise au repos,
- des moyens aptes à détecter les signaux d'activation et de désactivation générés,
- au moins un compteur conçu pour être incrémenté d'un pas à chaque détection d'un signal d'activation associé et être décrémenté d'un pas à chaque détection d'un signal de désactivation associé, et
- des moyens conçus pour générer un signal de mise en sommeil lorsqu'un compteur après avoir été décrémenté atteint un compte nul.

Plus précisément dans le cadre de la première mise en oeuvre visant un réseau de stations électroniques aptes à générer chacune au moins une fonction, dans lequel certaines au moins de ces fonctions sont des fonctions dites de réveil, le réseau comprend :
a) au niveau de certaines au moins des stations :
   - des moyens aptes à générer un signal d'activation lorsqu'une fonction de réveil associée précédemment inactive est sollicitée,
   - des moyens conçus pour générer un signal de désactivation lorsqu'une fonction associée de réveil précédemment active est mise au repos,
b) au niveau d'au moins une station de contrôle :
   - des moyens aptes à détecter les signaux d'activation et de désactivation générés par l'ensemble des stations,
   - au moins un compteur conçu pour être incrémenté d'un pas à chaque détection d'un signal d'activation et être décrémenté d'un pas à chaque détection d'un signal de désactivation, et
   - des moyens conçus pour générer un signal de mise en sommeil de l'ensemble des stations lorsque le compteur après avoir été décrémenté atteint un compte nul.

Dans le cadre de la seconde mise en oeuvre, le réseau de stations électroniques aptes à générer chacune au moins une fonction, comprend au niveau de chaque station :
- des moyens aptes à générer un signal d'activation lorsqu'une fonction précédemment inactive de cette station est sollicitée,
- des moyens conçus pour générer un signal de désactivation lorsqu'une fonction précédemment active de cette station est mise au repos,
- des moyens conçus pour détecter les signaux d'activation et de désactivation générés par cette station,
- au moins un compteur conçu pour être incrémenté d'un pas à chaque détection d'un signal d'activation et être décrémenté d'un pas à chaque détection d'un signal de désactivation, et
- des moyens conçus pour générer un signal de mise en sommeil de cette station lorsque le compteur après avoir été décrémenté atteint un compte nul.

D'autres caractéristiques, buts et avantages de la présente invention apparaîtront à la lecture de la description détaillée qui va suivre et en regard des dessins annexés, donnés à titre d'exemple non limitatifs et sur lesquels :
- la figure 1 représente une vue schématique générale d'un réseau de stations conforme à la présente invention,
- la figure 2 représente sous forme de blocs fonctionnels la structure générale de chaque station de réseau,
- la figure 3 représente sous forme de blocs fonctionnels la structure d'un module de communication intégré à chaque station,
- la figure 4 représente sous forme de blocs fonctionnels les moyens intégrés à chaque station pour contrôler le processus de réveil des stations,
- la figure 5 représente un mode de réalisation des moyens intégrés à la station de contrôle pour contrôler le processus de mise en sommeil de l'ensemble des stations, dans le cadre de la présente mise en oeuvre, et
- la figure 6 représente un mode de réalisation des moyens intégrés à chaque station pour contrôler le processus de mise en sommeil de chacune de ces stations, dans le cadre de la seconde mise en oeuvre.

On va par la suite décrire successivement la structure générale d'un réseau de stations conforme à la présente invention, la structure générale de chaque station, un processus de réveil local, un processus de réveil distant et le processus de mise en sommeil conforme à la présente invention.

### STRUCTURE GENERALE DU RESEAU.

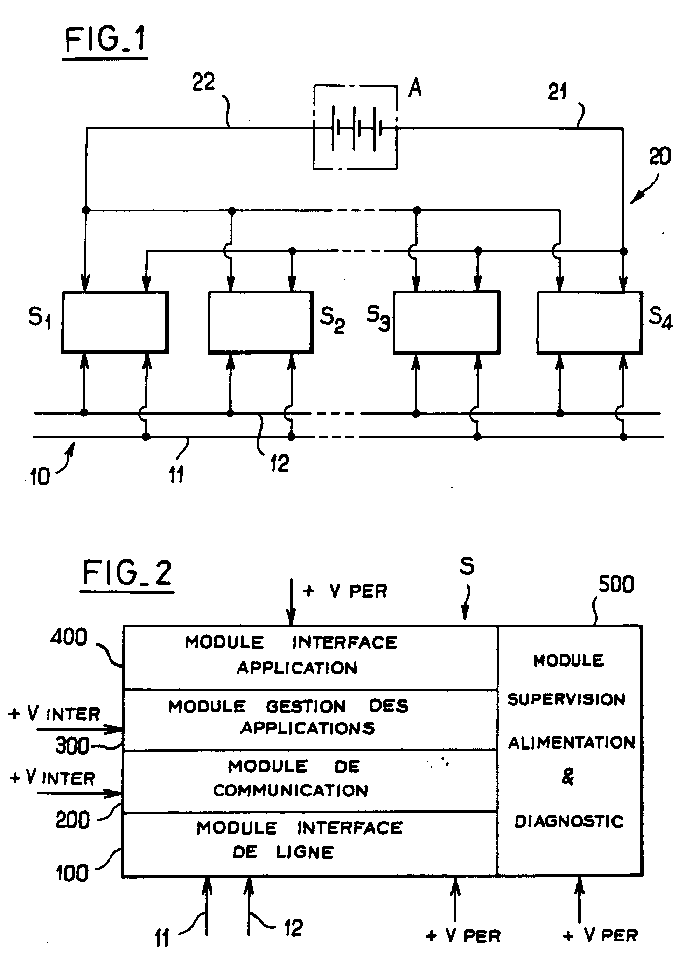

Comme représenté schématiquement sur la figure 1 annexée le réseau conforme à la présente invention comprend différentes stations électroniques S1, S2, S3, S4 (4 selon la figure 1 mais ce nombre n'est pas limitatif).

Les stations S1 à S4 sont reliées par un bus de communication 10. Il s'agit de préférence d'un bus à deux fils 11, 12.

L'un des rôles essentiels de ce bus 10 est de transmettre entre les différentes stations S1 à S4 des ordres de réveil ou de mise en sommeil adéquats. Le bus 10 peut cependant servir également à transmettre entre les différentes stations S1 à S4 tout signal d'information nécessaire au bon fonctionnement du réseau.

Le bus 10 peut être formé de fils électriques. Le bus 10 peut aussi être formé à l'aide de fibres optiques ou de tout moyen équivalent.

Les stations S1 à S4 sont alimentées par la batterie d'accumulateur A du véhicule automobile par l'intermédiaire d'un faisceau 20 à deux fils 21, 22. De préférence, la structure du faisceau 20 d'alimentation est de type en étoile.

Chacune des stations S1 à S4 peut prendre deux états: un état de veille et un état actif.

Dans l'état actif tous les moyens électroniques d'une station nécessaires pour la mise en oeuvre d'une fonction sont en service, tandis que dans l'état de veille seuls les moyens nécessaires pour assurer le réveil de la station restent en service, comme indiqué précédemment.

L'état actif se décompose lui-même en deux sous-états selon qu'une fonction associée à la station est ou non sollicitée.

Dans le cadre de la présente demande, on appelle processus de réveil, d'une station le passage de celle-ci de l'état de veille à l'état actif. On appelle par ailleurs processus de mise en sommeil, le passage d'une station de l'état actif à l'état de veille.

De préférence, les différentes stations S1 à S4 sont de structure identique.

Chaque station S1 à S4 peut être conçue pour générer plusieurs fonctions. Cette disposition n'est cependant pas limitative, c'est-à-dire qu'on peut prévoir que chaque station S1 à S4 génère une seule fonction.

### STRUCTURE D'UNE STATION

Comme indiqué schématiquement sur la figure 2, chaque station S se décompose schématiquement en cinq modules: un module d'interface de ligne 100 connecté au bus 10, un module de communication 200, un module de gestion des applications 300, un module d'interface application 400 et un module de supervision de l'alimentation et de diagnostic 500.

Les modules 100, 400 et 500, indispensables pour assurer le réveil d'une station S, restent en service en permanence, et sont pour cela alimentés en permanence, comme cela est schématisé sur la figure 2 sous la référence +VPER.

En revanche, les modules 200 et 300 qui sont seulement nécessaires pour la mise en oeuvre de la ou des fonctions associées à la station, ne sont mis en service que dans l'état actif. Pour cela les modules 200 et 300 sont alimentés par des moyens d'alimentation interruptibles schématisés sur la figure 2 sous la référence +VINTER.

Le module 100 d'interface de ligne, connu de l'homme de l'art, peut faire l'objet de différents modes de réalisation. De préférence, ce module 100 comprend pour l'essentiel une cellule type RC d'adaptation de ligne, un filtre passe bande, et des amplificateurs d'entrée sortie.

Le module de communication 200 peut également faire l'objet de différents modes de réalisation.

Il peut s'agir par exemple d'un système inspiré des dispositions décrites et représentées dans le document FR-A-2578070.

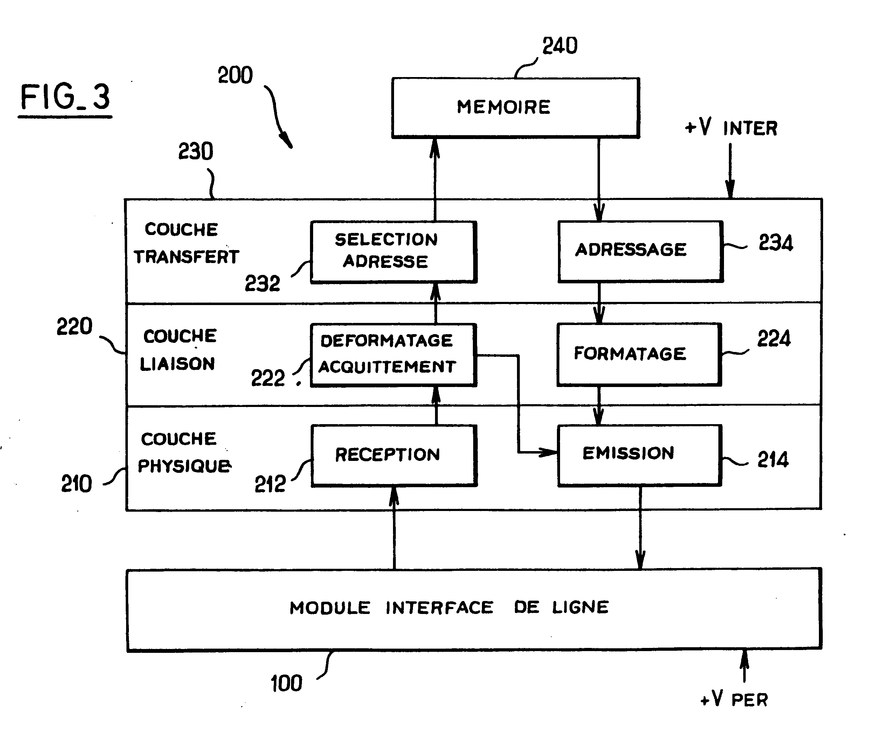

Pour l'essentiel, comme représenté schématiquement sur la figure 3, un tel module 200 comprend une couche physique 210, une couche de liaison 220 et une couche de transfert 230 associée à une mémoire 240. Dans le sens réception, les couches 210, 220 et 230 forment respectivement un module de réception 212, un module de déformatage et d'acquittement 222 et un module de sélection d'adresse 232. Dans le sens émission, les couches 210, 220, 230 forment respectivement un module d'émission 214, un module de formatage 224 et un module d'adressage 234.

Le module 300 de gestion des applications peut comprendre pour l'essentiel un microprocesseur associé de façon connue en soi à des moyens de mémoire.

Le module d'interface des applications 400 peut être formé de tout moyen classique connu de l'homme de l'art et ne sera donc pas décrit plus en détail par la suite.

Enfin, le module 500 de supervision de l'alimentation et de diagnostic de la station va être décrit plus en détail par la suite en rapport avec la description des processus de réveil et de mise en sommeil.

Plus précisément dans le cadre de la première mise en oeuvre, chaque station apte à mettre en oeuvre une fonction de réveil, comprend tout d'abord des moyens aptes à initier un réveil local de la station lorsque celle-ci est sollicitée localement par un opérateur, et des moyens conçus pour initier le réveil de l'ensemble des stations du réseau lorsqu'une station quelconque est sollicitée par un opérateur, ce dernier processus étant appelé processus de réveil distant dans le cadre de la présente demande.

Par ailleurs une station dite station de contrôle (voire plusieurs stations, dites de contrôle, pour renforcer la fiabilité du système) comprend d'autre part, des moyens aptes à contrôler le processus de mise en sommeil. Ces moyens surveillent l'activation des diverses fonctions du réseau et commandent la mise en sommeil de l'ensemble des stations.

Dans le cadre de la seconde mise en oeuvre, chaque station comprend tout d'abord des moyens aptes à initier un réveil local d'une station lorsqu'une station donnée est sollicitée localement par un opérateur, et des moyens conçus pour initier le réveil de l'ensemble des stations du réseau lorsqu'une station quelconque est sollicitée par un opérateur, ce dernier processus étant appelé processus de réveil distant dans le cadre de la présente demande.

Chaque station S1 à S4 comprend d'autre part, des moyens aptes à contrôler son processus de mise en sommeil.

### PROCESSUS DE REVEIL LOCAL

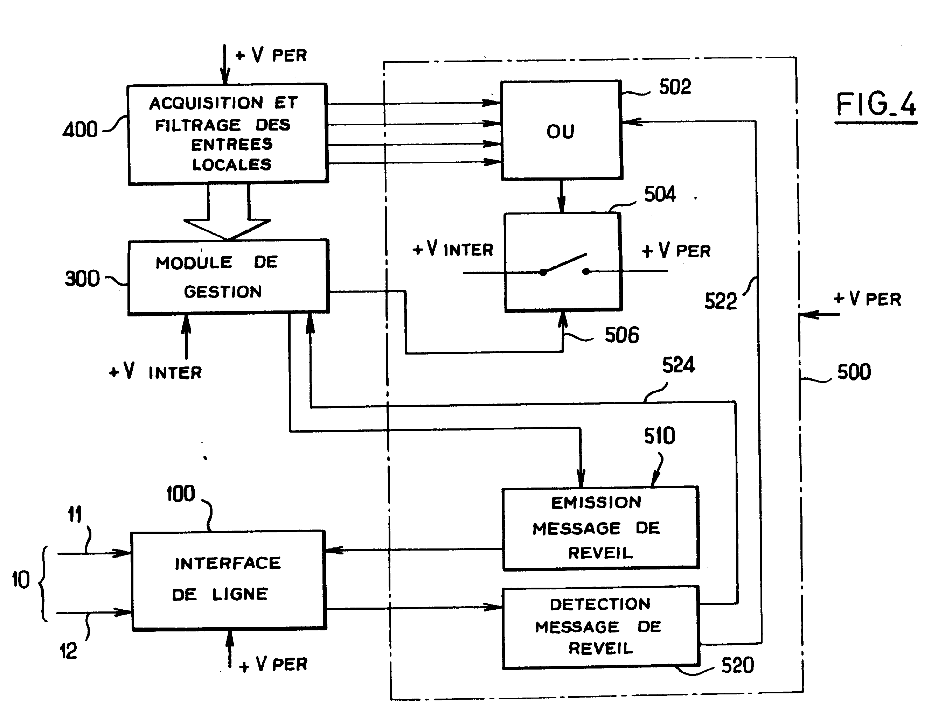

On a représenté schématiquement sur la figure 4 annexée le module d'interface de ligne 100, le module de gestion 300, le module d'interface d'application 400 et le module 500 d'une station conforme à la présente invention.

Comme indiqué précédemment, pour limiter la consommation du réseau de stations, lorsque le moteur est à l'arrêt, il est proposé de couper l'alimentation de tous les circuits d'une station non indispensables pour la remise sous tension de celle-ci. Pour assurer le réveil de la station, lorsque celle-ci est sollicitée localement, il est prévu dans le module 500, comme représenté sur la figure 4 annexée, une porte logique 502 dont les entrées sont reliées au module d'interface 400. Ainsi la sortie de la porte 502 est validée lorsque l'une au moins des fonctions de la station considérée est sollicitée. La sortie de la porte 502 contrôle une cellule 504 générant la tension d'alimentation interruptible +VINTER à partir de la tension d'alimentation permanente +VPER.

Par exemple, l'activation d'un contact de plafonnier suite à l'ouverture d'une portière, détectée par le module d'interface d'application 400, conduit à la validation de la sortie de la porte logique 502 et par conséquent à la fermeture de l'interrupteur intégré à la cellule 504. A ce stade, les modules de gestion des applications 300 et de communication 200, précédemment à l'état de veille, passent à l'état actif.

Le module de gestion 300 vérifie alors qu'une fonction associée à sa station est bien sollicitée. Si c'est le cas le module de gestion 300 verrouille la cellule d'alimentation interruptible 504 à l'état fermé, par l'intermédiaire de la liaison 506. Si par contre le module de gestion 300 ne détecte pas la sollicitation d'une fonction associée dans un délai déterminé, le module 300 commande la cellule d'alimentation interruptible 504 à l'état ouvert. Ce délai déterminé est surveillé par une temporisation auxiliaire initialisée lors de la validation de la sortie de la porte logique 502.

### PROCESSUS DE REVEIL DISTANT

Par ailleurs, l'activation d'une station quelconque du réseau, lorsqu'une fonction associée à celle-ci est sollicitée, comme indiqué précédemment, conduit au réveil de l'ensemble des stations du réseau selon le processus suivant.

Comme représenté sur la figure 4 annexée, les modules 500 de chaque station comprennent en outre une cellule 510 d'émission d'un message de réveil pilotée par le module de gestion 300 et reliée à l'interface de ligne 100, et une cellule 520 de détection de message de réveil dont l'entrée est reliée à l'interface de ligne 100 et la sortie est reliée à l'une des entrées de la porte logique 502.

Lorsqu'un module de gestion 300 passe de l'état de veille à l'état actif, il sollicite la cellule 510 d'émission d'un message de réveil. Celui-ci est alors dirigé, par l'intermédiaire de l'interface de ligne 100, sur le bus de communication 10 et reçu par l'ensemble des autres stations S1 à S4. Les interfaces de ligne 100 de ces dernières dirigent le message de réveil reçu vers la cellule 520 de détection de leur module 500. Lorsque ces cellules de détection 520 décèlent l'arrivée d'un message de réveil distant, elles valident la sortie de la porte logique 502 par l'intermédiaire de la liaison 522, afin de commander la mise en service de l'alimentation interruptible +VINTER. Puis, le module de gestion 300 alors mis sous tension est informé par la cellule de détection 520 par l'intermédiaire de la liaison 524, afin de verrouiller la cellule 504 par l'intermédiaire de la liaison 506 comme indiqué précédemment, si le module 300 détecte la sollicitation d'une fonction associée à cette station dans un délai déterminé. Ce délai est surveillé par la temporisation auxiliaire intégrée à la station, qui est initialisée lors de la validation de la sortie de la porte logique 502 comme indiqué précédemment dans le cadre du Processus de Réveil Local.

Le processus de réveil local précédemment décrit est donc déclenché sur une station par un changement d'état de l'une des entrées de cette station; tandis que le processus de réveil distant est déclenché par l'intermédiaire d'une autre station, suite à l'émission d'un message de réveil distant véhiculé par le bus 10.

### PROCESSUS DE MISE EN SOMMEIL CENTRALISE DANS LE CADRE DE LA PREMIERE MISE EN OEUVRE

Selon le processus de mise en sommeil centralisé proposé par la présente invention, une station dite de contrôle, surveille la sollicitation de l'ensemble des fonctions de réveil susceptibles d'être accomplies par le réseau et commande la mise en sommeil de l'ensemble des stations lorsqu'aucune fonction de réveil du réseau n'est sollicitée.

Plus précisément, dans ce contexte, on distingue deux types de fonction de réveil. Les fonctions du premier type correspondent aux fonctions à durée illimitée, c'est-à-dire les fonctions nécessitant une intervention d'un opérateur pour leur activation et une intervention de l'opérateur pour leur désactivation.

Les fonctions du second type correspondent aux fonctions à durée limitée, c'est-à-dire aux fonctions nécessitant une intervention d'un opérateur pour leur activation, mais conçues pour être désactivées automatiquement.

Comme fonctions du premier type à durée illimitée, on peut citer les cinq fonctions suivantes: mise en service du plus accumulateur par commande de la clef de contact, mise en service des signaux lumineux et d'éclairage, veilleuse, code, phare, mise en service des avertisseurs sonores, mise en service des signaux lumineux d'alerte, et mise en service des plafonniers. Comme exemples de fonctions du second type, on peut citer les fonctions suivantes: télécommande, déverrouillage ou verrouillage par clef ou contacteur.

Les modules de communication 200 sont conçus pour générer sur le bus de communication 10 par l'intermédiaire du module d'interface 100 :
- un signal d'activation d'un premier type lorsqu'une fonction de réveil du premier type à durée illimitée est sollicité par l'opérateur alors qu'elle était précédemment inactive,
- un signal de désactivation lorsqu'une fonction de réveil du premier type précédemment active est mise au repos, et
- un signal d'activation du second type lorsqu'une fonction de réveil du second type à durée limitée est sollicitée par l'opérateur alors qu'elle était précédemment inactive.

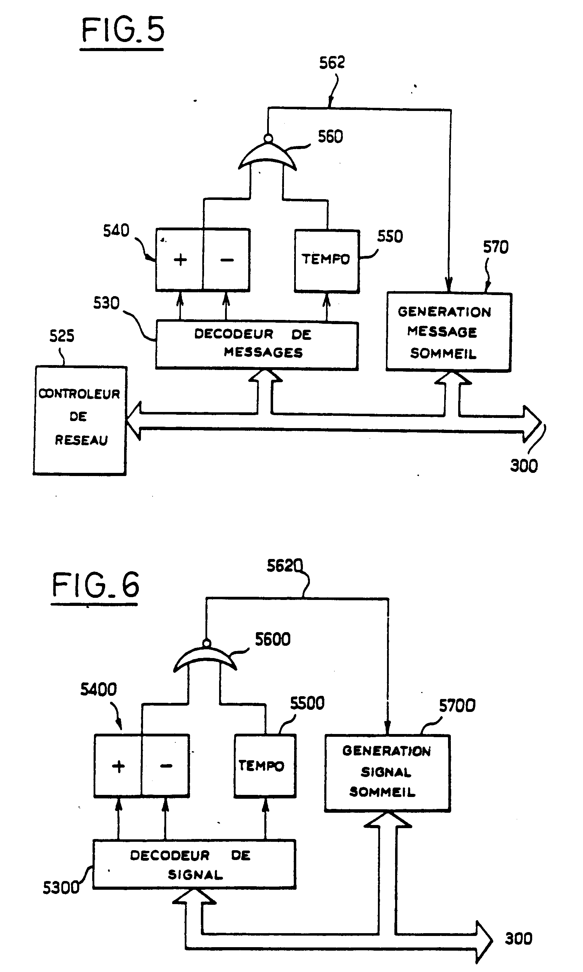

La station qui gère le processus de sommeil centralisé comprend, au niveau du module 500, comme représenté sur la figure 5, une cellule 530 formant décodeur de messages, un compteur 540, une temporisation 550, une porte logique 560 et une cellule 570 génératrice d'un message de sommeil centralisé.

Le décodeur de messages 530 est relié à l'interface de ligne 100 par l'intermédiaire d'un contrôleur de réseau 525.

Lorsque le décodeur de messages 530 décèle un message d'activation du premier type, il incrémente le compteur 540 d'un pas. Lorsque le décodeur de messages 530 décèle un signal de désactivation, il décremente le compteur 540 d'un pas. Enfin, lorsque le décodeur de messages 530 détecte un signal d'activation du second type, il initialise la temporisation 550.

La porte logique 560 reçoit sur ses entrées d'une part, la sortie du compteur 540, d'autre part la sortie de la temporisation 550.

La sortie 562 de la porte logique 560 est reliée à l'entrée de la cellule 570. La sortie 562 de la porte logique 560 est validée lorsque simultanément le compteur 540 est à zéro, et la temporisation n'évolue pas. Cela signifie que toutes les fonctions de réveil sont désactivées.

La cellule 570 peut alors générer un message de sommeil centralisé, qui transite par le contrôleur de réseau 525 et le module d'interface de ligne 100, pour parvenir à l'ensemble des stations S1 à S4 du réseau. Bien entendu, on peut prévoir une station du réseau attribuée exclusivement à la surveillance du contrôle de processus de mise en sommeil centralisé. On peut également attribuer l'une quelconque des stations du réseau au contrôle de ce processus, tout en autorisant la même station à réaliser d'autres fonctions.

Lorsqu'un message de mise en sommeil centralisé est reçu par une station, le module de gestion 300 correspondant commande l'ouverture de la cellule 504 contrôlant l'alimentation interruptible +VINTER. Les stations correspondantes passent alors à l'état de veille comme indiqué précédemment.

De préférence il est prévu, au niveau de la station de contrôle, une temporisation de contrôle (qui peut correspondre à la temporisation dénommée auxiliaire précédemment) qui interdit la génération du message de mise en sommeil avant l'écoulement d'un délai déterminé consécutif au réveil des stations, qu'il résulte d'un processus de réveil local ou d'un processus de réveil distant. Cette temporisation de contrôle peut être initialisée lors de la validation de la sortie de la porte logique 502 de la station de contrôle. La même temporisation de contrôle peut également être conçue pour être initialisée lors de la validation de la sortie de la porte logique 560 afin d'interdire la génération du message de mise au sommeil avant l'écoulement d'un délai déterminé consécutif à cette validation.

Le cas échéant, on peut prévoir que quel que soit le type de fonction de réveil mise en jeu au niveau d'une station, la sollicitation de celle-ci entraîne la génération d'un signal d'activation, tandis qu'un signal de désactivation est généré automatiquement lors de l'achèvement de la fonction.

Dans ce cas, la temporisation 550 représentée sur la figure 5 et précédemment évoquée devient inutile.

### PROCESSUS DE MISE EN SOMMEIL REPARTI DANS LE CADRE DE LA SECONDE MISE EN OEUVRE

Selon le processus de mise en sommeil réparti proposé dans le cadre de la présente invention, chaque station surveille la sollicitation des fonctions qui lui sont associées.

Plus précisément, dans ce contexte, on distingue deux types de fonction. Les fonctions du premier type correspondent aux fonctions à durée illimitée, c'est-à-dire les fonctions nécessitant une intervention d'un opérateur pour leur activation et une intervention de l'opérateur pour leur désactivation.

Les fonctions du second type correspondent aux fonctions à durée limitée, c'est-à-dire aux fonctions nécessitant une intervention d'un opérateur pour leur activation, mais conçues pour être désactivées automatiquement.

Comme fonctions du premier type à durée illimitée, on peut citer les cinq fonctions suivantes: mise en service du plus accumulateur par commande de la clef de contact, mise en service des signaux lumineux et d'éclairage, veilleuse, code, phare, mise en service des avertisseurs sonores, mise en service des signaux lumineux d'alerte, et mise en service des plafonniers. Comme exemples de fonctions du second type, on peut citer les fonctions suivantes: télécommande, déverrouillage ou verrouillage par clef ou contacteur.

Chaque station S1 à S4 est conçue pour générer de façon interne :
- un signal d'activation d'un premier type lorsqu'une fonction du premier type à durée illimitée de cette station est sollicitée par l'opérateur alors qu'elle était précédemment inactive,
- un signal de désactivation lorsqu'une fonction du premier type précédemment active de cette station est mise au repos, et
- un signal d'activation d'un second type lorsqu'une fonction du second type à durée limitée de cette station est sollicitée par l'opérateur alors qu'elle était précédemment inactive.

Chaque station comprend, au niveau du module 500, comme représenté sur la figure 6, une cellule 5300 formant décodeur de signaux d'activation ou de désactivation, un compteur 5400, une temporisation 5500, une porte logique 5600 et une cellule 5700 génératrice d'un signal de sommeil.

Le décodeur de signal 5300 reçoit les signaux d'activation et de désactivation générés par la station.

Lorsque le décodeur de signal 5300 décèle un signal d'activation du premier type, il incrémente le compteur 5400 d'un pas. Lorsque le décodeur de signal 5300 décèle un signal de désactivation, il décremente le compteur 5400 d'un pas. Enfin, lorsque le décodeur de signal 5300 détecte un signal d'activation du second type, il initialise la temporisation 5500.

La porte logique 5600 reçoit sur ses entrées d'une part, la sortie du compteur 5400, d'autre part la sortie de la temporisation 5500.

La sortie 5620 de la porte logique 5600 est reliée à l'entrée de la cellule 5700. La sortie 5620 de la porte logique 5600 est validée lorsque simultanément le compteur 5400 est à zéro, et la temporisation n'évolue pas. Cela signifie qu'aucune fonction de la station n'est activée.

La cellule 5700 peut alors générer un signal de sommeil qui commande le passage de la station correspondante de l'état actif à l'état de veille.

Pour cela lorsqu'un message de mise en sommeil est généré par une station, son module de gestion 300 commande l'ouverture de la cellule 504 contrôlant l'alimentation interruptible +VINTER.

De préférence il est prévu au niveau de chaque station, une temporisation de contrôle (qui peut correspondre à la temporisation dénommée auxiliaire précédemment) qui interdit la génération du signal de sommeil avant l'écoulement d'un délai déterminé consécutif au réveil de celle-ci, qu'il résulte d'un processus de réveil local ou d'un processus de réveil distant. Cette temporisation de contrôle est initialisée lors de la validation de la sortie de la porte logique 502. La même temporisation de contrôle peut également être conçue pour être initialisée lors de la validation de la sortie de la porte logique 5600, afin d'interdire la génération du signal de sommeil avant l'écoulement d'un délai déterminé consécutif à cette validation.

Le cas échéant, on peut prévoir que quel que soit le type de fonction mise en jeu au niveau d'une station, la sollicitation de celle-ci entraîne la génération d'un signal d'activation, tandis qu'un signal de désactivation est généré automatiquement lors de l'achèvement de la fonction.

Dans ce cas, la temporisation 5500 représentée sur la figure 6 et précédemment évoquée devient inutile.

Selon d'autres caractéristiques avantageuses de la présente invention :
- s'il existe une coïncidence entre l'émission d'un message de sommeil et l'activation d'une fonction locale par exemple de réveil, l'alimentation de la station correspondante est coupée et réactivée au bout d'une temporisation déterminée, par exemple de l'ordre de 5ms.
- les modules 500 comprennent en outre des moyens de diagnostic aptes à contrôler l'état de chacune des charges associées à une station donnée. A titre d'exemple, il peut s'agir de surveiller l'état des filaments d'ampoule.
- les messages de réveil et de mise en sommeil qui transitent par le bus de communication 10 sont non adressés, c'est-à-dire qu'ils sont destinés à l'ensemble des stations S1 à S4 connectées au bus 10. En revanche, les autres messages transitant par le bus 10 et destinés par exemple à contrôler la mise en service de fonction particulière d'une station donnée, sont adressés, c'est-à-dire qu'ils comprennent une partie d'adresse permettant d'activer la ou les seules stations adéquates.
- dans le cas d'émission sur le bus de communication 10 d'un message autre qu'un message de réveil ou de sommeil, ce message d'information doit être précédé d'un message de réveil distant afin d'assurer que la station destinatrice du message soit receptive.
- les signaux d'activation précités peuvent être formés des messages de réveil eux-mêmes, ou de signaux différents,
- chaque station peut comprendre un module abaisseur de tension de sorte que la tension +VINTER et la tension +VPER soient différentes de la tension de la batterie du véhicule automobile.

Bien entendu la présente invention n'est pas limitée aux modes de réalisation particuliers qui viennent d'être décrits.

## Revendications

1. Procédé de contrôle d'un réseau de stations électroniques aptes à générer chacune au moins une fonction, notamment pour véhicules automobiles, caractérisé par le fait qu'il comprend les étapes consistant à:
i) générer au niveau de certaines au moins des stations un signal d'activation lorsqu'une fonction précédemment inactive est sollicitée,
ii) générer un signal de désactivation lorsqu'une fonction associée précédemment active est mise au repos,
iii) détecter les signaux d'activation et de désactivation générés,
iv) incrémenter au moins un compteur (540, 5400) d'un pas à chaque détection d'un signal d'activation associé au compteur,
v) décrémenter le même compteur (540, 5400) d'un pas à chaque détection d'un signal de désactivation associé, et
vi) générer un signal de mise en sommeil (570, 5700) lorsqu'un compteur (540, 5400) après avoir été décrémenté atteint un compte nul.

2. Procédé de contrôle selon la revendication 1 d'un réseau de stations électroniques aptes à générer chacune au moins une fonction, notamment pour véhicules automobiles, dans lequel certaines au moins de ces fonctions sont des fonctions dites de réveil, caractérisé par le fait qu'il comprend les étapes consistant à:
a) au niveau de certaines au moins des stations :
i) générer un signal d'activation lorsqu'une fonction de réveil précédemment inactive est sollicitée,
ii) générer un signal de désactivation lorsqu'une fonction de réveil associée précédemment active est mise au repos,
b) au niveau d'au moins une station de contrôle comprenant un compteur :
i) détecter les signaux d'activation et de désactivation générés par l'ensemble des stations,
ii) incrémenter le compteur (540) d'un pas à chaque détection d'un signal d'activation,
iii) décrémenter le même compteur (540) d'un pas à chaque détection d'un signal de désactivation,
iv) générer un signal de mise en sommeil (570) de l'ensemble des stations (S1 à S4) lorsque le compteur (540) après avoir été décrémenté atteint un compte nul.

3. Procédé de contrôle selon la revendication 2, caractérisé par le fait qu'une seule station (S1 à S4) du réseau comprend un compteur (540).

4. Procédé de contrôle selon l'une des revendications 2 et 3, d'un réseau de stations électroniques aptes à générer au moins une fonction de réveil d'un premier type à durée illimitée nécessitant une intervention d'un opérateur pour l'activer et une intervention de l'opérateur pour la désactiver, et au moins une fonction de réveil d'un second type à durée limitée nécessitant une intervention d'un opérateur pour l'activer mais conçue pour être désactivée automatiquement, caractérisé par le fait qu'il comprend les étapes consistant à :
a) au niveau de certaines au moins des stations :
i) générer un signal d'activation d'un premier type lorsqu'une fonction associée de réveil du premier type à durée illimitée est sollicitée par l'opérateur alors qu'elle était précédemment inactive,
ii) générer un signal de désactivation lorsqu'une fonction associée de réveil du premier type précédemment active est mise au repos,
iii) générer un signal d'activation d'un second type lorsqu'une fonction associée de réveil du second type à durée limitée est sollicitée par l'opérateur alors qu'elle était précédemment inactive,
b) au niveau d'au moins une station de contrôle comprenant un compteur et une temporisation :
i) détecter les signaux d'activation et de désactivation générés par l'ensemble des stations,
ii) incrémenter le compteur (540) d'un pas à chaque détection d'un signal d'activation du premier type,
iii) décrémenter le même compteur (540) d'un pas à chaque détection d'un signal de désactivation,
iv) initialiser la temporisation (550) à chaque détection d'un signal d'activation du second type, et
v) générer un signal de mise en sommeil de l'ensemble des stations (S1 à S4) lorsque le compteur atteint un compte nul et que simultanément la temporisation (550) n'évolue pas.

5. Procédé selon l'une des revendications 2 à 4, caractérisé par le fait qu'il comprend en outre l'étape consistant à interdire la génération du signal de mise en sommeil avant l'écoulement d'un délai déterminé consécutif au réveil des stations.

6. Procédé selon la revendication 2, caractérisé par le fait qu'il comprend en outre l'étape consistant à interdire la génération du signal de mise en sommeil avant l'écoulement d'un délai déterminé consécutif à la décrémentation du compteur (540) à l'état nul.

7. Procédé selon la revendication 4, caractérisé par le fait qu'il comprend en outre l'étape consistant à interdire la génération du signal de mise en sommeil avant l'écoulement d'un délai déterminé consécutif à la détection de l'atteinte d'un état stable de la temporisation (550) accompagné d'un compte nul dans le compteur (540).

8. Procédé de contrôle selon la revendication 1, caractérisé par le fait qu'il comprend les étapes consistant au niveau de chaque station à:
i) générer un signal d'activation lorsqu'une fonction précédemment inactive de cette station est sollicitée,
ii) générer un signal de désactivation lorsqu'une fonction de cette station précédemment active est mise au repos,
iii) détecter les signaux d'activation et de désactivation générés par cette station,
iv) incrémenter un compteur (5400) incorporé à cette station d'un pas à chaque détection d'un signal d'activation généré par cette station,
v) décrémenter le même compteur (5400) d'un pas à chaque détection d'un signal de désactivation généré par cette station, et
vi) générer un signal de mise en sommeil (5700) de cette station (S1 à S4) lorsque le compteur (540) après avoir été décrémenté atteint un compte nul.

9. Procédé de contrôle selon la revendication 8, d'un réseau de stations électroniques dans lequel certaines au moins des stations sont aptes à générer au moins une fonction d'un premier type à durée illimitée nécessitant une intervention d'un opérateur pour l'activer et une intervention de l'opérateur pour la désactiver, et au moins une fonction d'un second type à durée limitée nécessitant une intervention d'un opérateur pour l'activer mais conçue pour être désactivée automatiquement, caractérisé par le fait qu'il comprend les étapes consistant au niveau de chacune de ces stations à :
- générer un signal d'activation d'un premier type lorsqu'une fonction du premier type à durée illimitée de cette station est sollicitée par l'opérateur alors qu'elle était précédemment inactive,
- générer un signal de désactivation lorsqu'une fonction du premier type précédemment active de cette station est mise au repos,
- générer un signal d'activation d'un second type lorsqu'une fonction du second type à durée limitée de cette station est sollicitée par l'opérateur alors qu'elle était précédemment inactive,
- détecter les signaux d'activation et de désactivation générés par cette station,
- incrémenter le compteur (5400) incorporé à cette station d'un pas à chaque détection d'un signal d'activation du premier type généré par cette station,
- décrémenter le même compteur (5400) d'un pas à chaque détection d'un signal de désactivation généré par cette station,
- initialiser une temporisation (550) incorporée à cette station à chaque détection d'un signal d'activation du second type généré par cette station, et
- générer un signal de mise en sommeil de cette station (S1 à S4) lorsque le compteur atteint un compte nul et que simultanément la temporisation (550) n'évolue pas.

10. Procédé selon l'une des revendications 8 ou 9, caractérisé par le fait qu'il comprend en outre l'étape consistant à interdire la génération du signal de mise en sommeil avant l'écoulement d'un délai déterminé consécutif au réveil de la station associée.

11. Procédé selon la revendication 8, caractérisé par le fait qu'il comprend en outre l'étape consistant à interdire la génération du signal de mise en sommeil avant l'écoulement d'un délai déterminé consécutif à la décrémentation du compteur (5400) à l'état nul.

12. Procédé selon la revendication 9, caractérisé par le fait qu'il comprend en outre l'étape consistant à interdire la génération du signal de mise en sommeil avant l'écoulement d'un délai déterminé consécutif à la détection de l'atteinte d'un état stable de la temporisation (5500) accompagné d'un compte nul dans le compteur (5400).

13. Réseau de stations électroniques aptes à générer chacune au moins une fonction, notamment pour véhicules automobiles, caractérisé par le fait qu'il comprend au niveau de certaines au moins des stations :
- des moyens aptes à générer un signal d'activation lorsqu'une fonction associée précédemment inactive est sollicitée,
- des moyens aptes à générer un signal de désactivation lorsqu'une fonction associée précédemment active est mise au repos,
- des moyens aptes à détecter les signaux d'activation et de désactivation générés,
- un compteur (540, 5400) conçu pour être incrémenté d'un pas à chaque détection d'un signal d'activation associé et être décrémenté d'un pas à chaque détection d'un signal de désactivation associé, et
- des moyens aptes à générer un signal de mise en sommeil lorsqu'un compteur (540, 5400) après avoir été décrémenté atteint un compte nul.

14. Réseau selon la revendication 13, caractérisé par le fait qu'il comprend :
a) au niveau de certaines au moins des stations :
- des moyens aptes à générer un signal d'activation lorsqu'une fonction de réveil associée précédemment inactive est sollicitée,
- des moyens aptes à générer un signal de désactivation lorsqu'une fonction associée de réveil précédemment active est mise au repos,
b) au niveau d'au moins une station de contrôle :
- des moyens aptes à détecter les signaux d'activation et de désactivation générés par l'ensemble des stations,
- un compteur (540) conçu pour être incrémenté d'un pas à chaque détection d'un signal d'activation et être décrémenté d'un pas à chaque détection d'un signal de désactivation, et
- des moyens aptes à générer un signal de mise en sommeil de l'ensemble des stations (S1 à S4) lorsque le compteur (540) après avoir été décrémenté atteint un compte nul.

15. Réseau selon la revendication 14, caractérisé par le fait que les diverses stations du réseau sont interconnectées par un bus de transmission (10), et qu'une seule station (S1 à S4) du réseau comprend un compteur (540).

16. Réseau selon l'une des revendications 14 et 15, caractérisé par le fait qu'il comprend des stations aptes à générer au moins une fonction de réveil d'un premier type à durée illimitée nécessitant une intervention d'un opérateur pour l'activer et une intervention de l'opérateur pour la désactiver, et au moins une fonction de réveil d'un second type à durée limitée nécessitant une intervention d'un opérateur pour l'activer mais conçue pour être désactivée automatiquement, et caractérisé par le fait qu'il comprend :
a) au niveau de certaines au moins des stations :
- des moyens aptes à générer un signal d'activation d'un premier type lorsqu'une fonction associée de réveil du premier type à durée illimitée est sollicitée par l'opérateur alors qu'elle était précédemment inactive,
- des moyens aptes à générer un signal de désactivation lorsqu'une fonction associée de réveil du premier type précédemment active est mise au repos,
- des moyens aptes à générer un signal d'activation d'un second type lorsqu'une fonction associée de réveil du second type à durée limitée est sollicitée par l'opérateur alors qu'elle était précédemment inactive,
b) au niveau d'au moins une station de contrôle :
- des moyens aptes à détecter les signaux d'activation et de désactivation générés par l'ensemble des stations,
- un compteur (540) conçu pour être incrémenté d'un pas à chaque détection d'un signal d'activation du premier type et être décrémenté d'un pas à chaque détection d'un signal de désactivation,
- une temporisation (550) conçue pour être initialisée à chaque détection d'un signal d'activation du second type, et
- des moyens aptes à générer un signal de mise en sommeil de l'ensemble des stations (S1 à S4) lorsque le compteur (540) atteint un compte nul et que simultanément la temporisation (550) a cessé d'évoluer.

17. Réseau selon l'une des revendications 14 à 16, caractérisé par le fait que chaque station comprend en outre des moyens (500) aptes à surveiller l'état des charges associées.

18. Réseau selon l'une des revendications 14 à 17, caractérisé par le fait que la station de contrôle comprend en outre une temporisation auxiliaire conçue pour être initialisée lors du réveil des stations afin d'interdire la génération du signal de mise en sommeil avant l'écoulement d'un délai déterminé consécutif à ce réveil.

19. Réseau selon la revendication 14, caractérisé par le fait que la station de contrôle comprend en outre une temporisation auxiliaire conçue pour être initialisée lorsque le compteur (540) atteint un compte nul afin d'interdire la génération du signal de mise en sommeil avant l'écoulement d'un délai déterminé consécutif à l'atteinte de cet état.

20. Réseau selon la revendication 16, caractérisé par le fait que la station de contrôle comprend en outre une temporisation auxiliaire conçue pour être initialisée lorsque la station détecte l'atteinte de l'état stable de la temporisation (550) accompagné d'un compte nul dans le compteur (540).

21. Réseau selon la revendication 13, caractérisé par le fait qu'il comprend au niveau de chaque station :
- des moyens aptes à générer un signal d'activation lorsqu'une fonction précédemment inactive de cette station est sollicitée,
- des moyens aptes à générer un signal de désactivation lorsqu'une fonction précédemment active de cette station est mise au repos,
- des moyens conçus pour détecter les signaux d'activation et de désactivation générés par cette station,
- un compteur (5400) conçu pour être incrémenté d'un pas à chaque détection d'un signal d'activation et être décrémenté d'un pas à chaque détection d'un signal de désactivation, et
- des moyens aptes à générer un signal de mise en sommeil de cette station (S1 à S4) lorsque le compteur (5400) après avoir été décrémenté atteint un compte nul.

22. Réseau selon la revendication 21, caractérisé par le fait que les diverses stations du réseau sont interconnectées par un bus de transmission (10).

23. Réseau selon l'une des revendications 21 ou 22, caractérisé par le fait qu'il comprend des stations aptes à générer au moins une fonction d'un premier type à durée illimitée nécessitant une intervention d'un opérateur pour l'activer et une intervention de l'opérateur pour la désactiver, et au moins une fonction d'un second type à durée limitée nécessitant une intervention d'un opérateur pour l'activer mais conçue pour être désactivée automatiquement, et caractérisé par le fait qu'il comprend au niveau de chacune de ces stations :
- des moyens aptes à générer un signal d'activation d'un premier type lorsqu'une fonction du premier type à durée illimitée de cette station est sollicitée par l'opérateur alors qu'elle était précédemment inactive,
- des moyens aptes à générer un signal de désactivation lorsqu'une fonction du premier type précédemment active de cette station est mise au repos,
- des moyens aptes à générer un signal d'activation d'un second type lorsqu'une fonction du second type à durée limitée de cette station est sollicitée par l'opérateur alors qu'elle était précédemment inactive,
- des moyens aptes à détecter les signaux d'activation et de désactivation générés par cette station,
- un compteur (5400) conçu pour être incrémenté d'un pas à chaque détection d'un signal d'activation du premier type généré par cette station et être décrémenté d'un pas à chaque détection d'un signal de désactivation généré par cette station,
- une temporisation (5500) conçue pour être initialisée à chaque détection d'un signal d'activation du second type généré par cette station, et
- des moyens aptes à générer un signal de mise en sommeil de cette station (S1 à S4) lorsque le compteur (5400) atteint un compte nul et que simultanément la temporisation (5500) a cessé d'évoluer.

24. Réseau selon l'une des revendications 21 à 23, caractérisé par le fait que chaque station comprend en outre des moyens (500) aptes à surveiller l'état des charges associées.

25. Réseau selon l'une des revendications 21 à 24, caractérisé par le fait que chaque station comprend en outre une temporisation auxiliaire conçue pour être initialisée lors du réveil de la station associée afin d'interdire la génération du signal de mise en sommeil avant l'écoulement d'un délai déterminé consécutif à ce réveil.

26. Réseau selon la revendication 21, caractérisé par le fait que chaque station comprend en outre une temporisation auxiliaire conçue pour être initialisée lorsque le compteur (5400) atteint un compte nul afin d'interdire la génération du signal de mise en sommeil avant l'écoulement d'un délai déterminé consécutif à l'atteinte de cet état.

27. Réseau selon la revendication 23, caractérisé par le fait que chaque station comprend en outre une temporisation auxiliaire conçue pour être initialisée lorsque la station détecte l'atteinte de l'état stable de la temporisation (5500) accompagné d'un compte nul dans le compteur (5400).

## Patentansprüche

1. Verfahren zum Steuern eines Netzwerkes elektronischer Stationen, die je wenigstens eine Funktion zu generieren vermögen, insbesondere für Kraftfahrzeuge, dadurch gekennzeichnet, daß es die Arbeitsschritte umfaßt:
i) Generieren bei wenigstens bestimmten Stationen eines Aktivierungssignals, wenn eine zuvor inaktive Funktion angefordert wird,
ii) Generieren eines Deaktivierungssignals, wenn eine zugehörige, zuvor aktive Funktion in Ruhezustand geschaltet wird,
iii) Erfassen der erzeugten Aktivierungs- und Deaktivierungssignale,
iv) Vorwärtsschalten wenigstens eines Zählers (540, 5400) um einen Schritt bei jeder Erfassung eines dem Zähler zugeordneten Aktivierungssignals,
v) Rückwärtsschalten desselben Zählers (540, 5400) um einen Schritt bei jeder Erfassung eines zugehörigen Deaktivierungssignals, und
vi Generieren eines Signals zum Schalten in den Schlafzustand (570, 5700), wenn ein Zähler (540, 5400) nach dem Rückwärtsschalten einen Zählstand Null erreicht.

2. Verfahren nach Anspruch 1 zum Steuern eines Netzwerks elektronischer Stationen, die je wenigstens eine Funktion zu generieren vermögen, insbesondere für Kraftfahrzeuge, bei dem wenigstens bestimmte dieser Funktionen sogenannte Weckfunktionen sind, dadurch gekennzeichnet, daß es die Arbeitschritte umfaßt:
a) bei wenigstens bestimmten Stationen:
i) Generieren eines Aktivierungssignals, wenn eine zuvor inaktive Weckfunktion angefordert wird,
ii) Generieren eines Deaktivierungssignals, wenn eine zugehörige, zuvor aktive Weckfunktion in Ruhezustand geschaltet wird,
b) bei wenigstens einer einen Zähler aufweisenden Steuerstation:
i) Erfassen der von der Gesamtheit der Stationen erzeugten Aktivierungs- und Deaktivierungssignale,
ii) Vorwärtsschalten des Zählers (540) um einen Schritt bei jeder Erfassung eines Aktivierungssignals,
iii) Rückwärtsschalten desselben Zählers (540) um einen Schritt bei jeder Erfassung eines Deaktivierungssignals,
iv) Generieren eines Signals zum Schalten in den Schlafzustand (570) der Gesamtheit der Stationen (S1 bis S4), wenn der Zähler (540) nach dem Rückwärtsschalten einen Zählstand Null erreicht.

3. Steuerverfahren nach Anspruch 2, dadurch gekennzeichnet, daß eine einzige Station (S1 bis S4) des Netzwerks einen Zähler (540) aufweist.

4. Verfahren nach einem der Ansprüche 2 und 3 zum Steuern eines Netzwerks elektronischer Stationen, die in der Lage sind, wenigstens eine Weckfunktion eines ersten Typs von unbegrenzter Dauer, welche zu ihrer Aktivierung eine Intervention eines Bedieners und zu ihrer Deaktivierung eine Intervention des Bedieners erfordert, und wenigstens eine Weckfunktion eines zweiten Typs von begrenzter Dauer zu generieren, die zu ihrer Aktivierung eine Intervention eines Bedieners erfordert, aber so ausgelegt ist, daß sie automatisch deaktiviert wird, dadurch gekennzeichnet, daß es die Arbeitsschritte umfaßt:
a) bei wenigstens bestimmten Stationen:
i) Generieren eines Aktivierungssignals eines ersten Typs, wenn eine zugehörige Weckfunktion des ersten Typs von unbegrenzter Dauer durch den Bediener angefordert wird, wenn sie zuvor inaktiv war,
ii) Generieren eines Deaktivierungssignals, wenn eine zugehörige, zuvor aktive Weckfunktion des ersten Typs in den Ruhezustand geschaltet wird,
iii) Generieren eines Aktivierungssignals eines zweiten Typs, wenn eine zugehörige Weckfunktion des zweiten Typs von begrenzter Dauer durch den Bediener angefordert wird, wenn sie zuvor inaktiv war,
b) bei wenigstens einer mit einem Zähler und einer Zeitsperre versehenen Steuerstation:
i) Erfassen der von der Gesamtheit der Stationen erzeugten Aktivierungs- und Deaktivierungssignale,
ii) Vorwärtsschalten des Zählers (540) um einen Schritt bei jeder Erfassung eines Aktivierungssignals des ersten Typs,
iii) Rückwärtsschalten desselben Zählers (540) um einen Schritt bei jeder Erfassung eines Deaktivierungssignals,
iv) Initialisieren der Zeitsperre (550) bei jeder Erfassung eines Aktivierungssignals des zweiten Typs, und
v) Generieren eines Signals zum Schalten in den Schlafzustand der Gesamtheit der Stationen (S1 bis S4), wenn der Zähler einen Zählstand Null erreicht und zur gleichen Zeit die Zeitsperre sich nicht ändert.

5. Verfahren nach einem der Ansprüche 2 bis 4, dadurch gekennzeichnet, daß es ferner den Arbeitschritt umfaßt, das Generieren des Signals zum Schalten in den Schlafzustand vor dem Ablaufen einer bestimmten, dem Wecken der Stationen folgenden Frist zu sperren.

6. Verfahren nach Anspruch 2, dadurch gekennzeichnet, daß es ferner den Arbeitsschritt umfaßt, das Generieren des Signals zum Schalten in den Schlafzustand vor dem Ablaufen einer bestimmten, der Rückwärtsschaltung des Zählers (540) auf den Zählstand Null folgenden Frist zu sperren.

7. Verfahren nach Anspruch 4, dadurch gekennzeichnet, daß es ferner den Arbeitschritt umfaßt, das Generieren des Signals zum Schalten in den Schlafzustand vor dem Ablaufen einer bestimmten Frist zu sperren, die der Feststellung, daß ein stabiler Zustand der Zeitsperre (550) erreicht ist, in Verbindung mit einem Zählstand Null des Zählers (5490 folgt.

8. Steuerverfahren nach Anspruch 1, dadurch gekennzeichnet, daß es bei jeder Station die Arbeitsschritte umfaßt:
i) Generieren eines Aktivierungssignals, wenn eine zuvor inaktive Funktion dieser Station angefordert wird,
ii) Generieren eines Deaktivierungssignals, wenn eine zuvor aktive Funktion dieser Station in den Ruhezustand geschaltet wird,
iii) Erfassen der von dieser Station erzeugten Aktivierungs- und Deaktivierungssignale,
iv) Vorwärtsschalten eines in diese Station eingegliederten Zählers (5400) um einen Schritt bei jeder Erfassung eines von dieser Station generierten Aktivierungssignals,
v) Rückwärtschalten desselben Zählers (5400) um einen Schritt bei jeder Erfassung eines von dieser Station generierten Deaktivierungssignals, und
vi) Generieren eines Signals (5700) zum Schalten dieser Station (S1 bis S4) in den Schlafzustand, wenn der Zähler (540) nach dem Rückwärtsschalten einen Zählstand Null erreicht.

9. Verfahren nach Anspruch 8 zum Steuern eines Netzwerks elektronischer Stationen, bei dem wenigstens bestimmte Stationen in der Lage sind, wenigstens eine Funktion eines ersten Typs von unbegrenzter Dauer, die zu ihrer Aktivierung eine Intervention eines Bedieners erfordert und zu ihrer Deaktivierung eine Intervention des Bedieners erfordert, und wenigstens eine Funktion eines zweiten Typs von begrenzter Dauer zu generieren, die zu,ihrer Aktivierung eine Intervention eines Bedieners erfordert, aber so ausgelegt ist, daß sie automatisch deaktiviert wird, dadurch gekennzeichnet, daß es bei jeder dieser Stationen die Arbeitsschritte umfaßt:
- Generieren eines Aktivierungssignals eines ersten Typs, wenn eine Funktion des ersten Typs von unbegrenzter Dauer dieser Station durch den Bediener angefordert wird, wenn sie zuvor inaktiv war,
- Generieren eines Deaktivierungssignals, wenn eine zuvor aktive Funktion des ersten Typs dieser Station in den Ruhezustand geschaltet wird,
- Generieren eines Aktivierungssignals eines zweiten Typs, wenn eine Funktion des zweiten Typs von begrenzter Dauer dieser Station durch den Bediener angefordert wird, wenn sie zuvor inaktiv war,
- Erfassen der von dieser Station generierten Aktivierungs- und Deaktivierungssignale,
- Vorwärtsschalten des in diese Station eingegliederten Zählers (5400) um einen Schritt bei jeder Erfassung eines von dieser Station generierten Aktivierungssignals des ersten Typs,
- Rückwärtsschalten desselben Zählers (5400) um einen Schritt bei jeder Erfassung eines von dieser Station generierten Deaktivierungssignals,
- Initialisieren einer in diese Station eingegliederten Zeitsperre (550) bei jeder Erfassung eines von dieser Station generierten Aktivierungssignals des zweiten Typs, und
- Generieren eines Signals zum Schalten dieser Station (S1 bis S4) i den Schlafzustand, wenn der Zähler einen Zählstand Null erreicht und zur gleichen Zeit die Zeitsperre (55) sich nicht ändert.

10. Verfahren nach einem der Ansprüche 8 oder 9, dadurch gekennzeichnet, daß es ferner den Arbeitsschritt der Sperrung des Generierens des Signals zum Schalten in den Schlafzustand vor dem Ablaufen einer bestimmten, dem Wecken der zugehörigen Station folgenden Frist umfaßt.

11. Verfahren nach Anspruch 8, dadurch gekennzeichnet, daß es ferner den Arbeitsschritt der Sperrung des Generierens des Signals zum Schalten in den Schlafzustand vor dem Ablaufen einer bestimmten, der Rückwärtsschaltung des Zählers (5400) auf den Zählstand Null folgenden Frist umfaßt.

12. Verfahren nach Anspruch 9, dadurch gekennzeichnet, daß es ferner den Arbeitsschritt der Sperrung des Generierens des Signals zum Schalten in den Schlafzustand vor dem Ablaufen einer bestimmen Frist umfaßt, die der Feststellung des Erreichens eines stabilen Zustands der Zeitsperre (5500) in Verbindung mit einem Zählstand Null im Zähler (5400) folgt.

13. Netzwerk elektronischer Stationen, die je wenigstens eine Funktion zu generieren vermögen, insbesondere für Kraftfahrzeuge, dadurch gekennzeichnet, daß es bei wenigstens bestimmten Stationen umfaßt:
- Einrichtungen zum Generieren eines Aktivierungssignals, wenn eine zugehörige, zuvor inaktive Funktion angefordert wird,
- Einrichtungen zum Generieren eines Deaktivierungssignals, wenn eine zugehörige, zuvor aktive Funktion in den Ruhezustand geschaltet wird,
- Einrichtungen zum Erfassen der erzeugten Aktivierungs- und Deaktivierungssignale,
- einen Zähler (540, 5400), der ausgelegt ist, bei jeder Erfassung eines zugehörigen Aktivierungssignals um einen Schritt vorwärtsgeschaltet und bei jeder Erfassung eines zugehörigen Deaktivierungssignals um einen Schritt rückwärtsgeschaltet zu werden, und
- Einrichtungen zum Generieren eines Signals zum Schalten in den Schlafzustand, wenn ein Zähler (540, 5400) nach dem Rückwärtsschalten einen Zählstand Null erreicht.

14. Netzwerk nach Anspruch 13, dadurch gekennzeichnet, daß es umfaßt:
a) bei wenigstens bestimmten Stationen:
- Einrichtungen zum Generieren eines Aktivierungssignals, wenn eine zugehörige, zuvor inaktive Funktion angefordert wird,
- Einrichtungen zum Generieren eines Deaktivierungssignals, wenn eine zugehörige, zuvor aktive Weckfunktion in den Ruhezustand geschaltet wird,
b) bei wenigstens einer Steuerstation:
- Einrichtungen zum Erfassen der von der Gesamtheit der Stationen erzeugten Aktivierungs- und Deaktivierungssignale,
- einen Zähler (540), der ausgelegt ist, bei jeder Erfassung eines Aktivierungssignals um einen Schritt vorwärtsgeschaltet und bei jeder Erfassung eines Deaktivierungssignals um einen Schritt rückwärtsgeschaltet zu werden, und
- Einrichtungen zum Generieren eines Signals zum Sc:alten der Gesamtheit der Stationen (S1 bis S4) in den Schlafzustand, wenn der Zähler (540) nach dem Rückwärtsschalten einen Zählstand Null erreicht.

15. Netzwerk nach Anspruch 14, dadurch gekennzeichnet, daß die verschiedenen Stationen des Netzwerks durch einen Übertragungsbus (10) miteinander verbunden sind, und daß eine einzige Station (S1 bis S4) des Netzwerks einen Zähler (540) aufweist.

16. Netzwerk nach einem der Ansprüche 14 und 15, dadurch gekennzeichnet, daß es Stationen umfaßt zum Generieren wenigstens einer Weckfunktion eines ersten Typs von unbegrenzter Dauer, die zu ihrer Aktivierung eine Intervention eines Bedieners erfordert und zu ihrer Deaktivierung eine Intervention des Bedieners erfordert, und wenigstens einer Weckfunktion eines zweiten Typs von begrenzter Dauer, die zu ihrer Aktivierung eine Intervention eines Bedieners erfordert, aber so ausgelegt ist, daß sie automatisch deaktiviert wird, und dadurch gekennzeichnet, daß es umfaßt:
a) bei wenigstens bestimmten Stationen:
- Einrichtungen zum Generieren eines Aktivierungssignals eines ersten Typs, wenn eine zugehörige Weckfunktion des ersten Typs von unbegrenzter Dauer durch den Bediener angefordert wird, wenn sie zuvor inaktiv war,
- Einrichtungen zum Generieren eines Deaktivierungssignals, wenn eine zugehörige, zuvor aktive Weckfunktion des ersten Typs in den Ruhezustand geschaltet wird,
- Einrichtungen zum Generieren eines Aktivierungssignals eines zweiten Typs, wenn eine zugehörige Weckfunktion des zweiten Typs von begrenzter Dauer durch den Bediener angefordert wird, wenn sie zuvor inaktiv war,
b) bei wenigstens einer Steuerstation:
- Einrichtungen zum Erfassen der von der Gesamtheit der Stationen erzeugten Aktivierungs- und Deaktivierungssignale,
- einen Zähler (540), der ausgelegt ist, bei jeder Erfassung eines Aktivierungssignals des ersten Typs um einen Schritt vorwärtsgeschaltet und bei jeder Erfassung eines Deaktivierungssignals um einen Schritt rückwärtsgeschaltet zu werden,
- einer Zeitsperre (550), die ausgelegt ist, bei jeder Erfassung eines Aktivierungssignals des zweiten Typs initialisiert zu werden, und
- Einrichtungen zum Generieren eines Signals zum Schalten der Gesamtheit der Stationen (S1 bis S4) in den Schlafzustand, wenn der Zähler (540) einen Zählstand Null erreicht und zur gleichen Zeit die Zeitsperre (55) aufgehört hat, sich zu ändern.

17. Netzwerk nach einem der Ansprüche 14 bis 16, dadurch gekennzeichnet, daß jede Station ferner Einrichtungen (500) zum Überwachen des Zustandes der zugehörigen Ladungen umfaßt.

18. Netzwerk nach einem der Ansprüche 14 bis 17, dadurch gekennzeichnet, daß die Steuerstation ferner eine Hilfszeitsperre umfaßt, die ausgelegt ist, beim Wecken der Stationen initialisiert zu werden, um das Generieren des Signals zum Schalten in den Schlafzustand vor dem Ablaufen einer bestimmten, diesem Wecken folgenden Frist zu sperren.

19. Netzwerk nach Anspruch 14, dadurch gekennzeichnet, daß die Steuerstation ferner eine Hilfszeitsperre umfaßt, die ausgelegt ist, initialisiert zu werden, wenn der Zähler (540) einen Zählstand Null erreicht, um das Generieren des Signals zum Schalten in den Schlafzustand vor dem Ablaufen einer bestimmten, dem Erreichen dieses Zustandes folgenden Frist zu sperren.

20. Netzwerk nach Anspruch 16, dadurch gekennzeichnet, daß die Steuerstation ferner eine Hilfszeitsperre umfaßt, die ausgelegt ist, initialisiert zu werden, wenn die Station das Erreichen des stabilen Zustands der Zeitsperre (550) in Verbindung mit einem Zählstand Null im Zähler (540) feststellt.

21. Netzwerk nach Anspruch 13, dadurch gekennzeichnet, daß es bei jeder Station umfaßt:
- Einrichtungen zum Generieren eines Aktivierungssignals, wenn eine zuvor inaktive Funktion dieser Station angefordert wird,
- Einrichtungen zum Generieren eines Deaktivierungssignals, wenn eine zuvor aktive Funktion dieser Station in den Ruhezustand geschaltet wird,
- Einrichtungen zum Erfassen der von dieser Station generierten Aktivierungs- und Deaktivierungssignale,
- einen Zähler (5400), der ausgelegt ist, bei jeder Erfassung eines Aktivierungssignals um einen Schritt vorwärtsgeschaltet und bei jeder Erfassung eines Deaktivierungssignals um einen Schritt rückwärtsgeschaltet zu werden, und
- Einrichtungen zum Generieren eines Signals zum Schalten dieser Station (S1 bis S4) in den Schlafzustand, wenn der Zähler (5400) nach dem Rückwärtsschalten einen Zählstand Null erreicht.

22. Netzwerk nach Anspruch 21, dadurch gekennzeichnet, daß die verschiedenen Stationen des Netzwerks durch einen Übertragungsbus (10) miteinander verbunden sind.

23. Netzwerk nach einem der Ansprüche 21 oder 22, dadurch gekennzeichnet, daß es Stationen umfaßt zum Generieren wenigstens einer Funktion eines ersten Typs von unbegrenzter Dauer, die zu ihrer Aktivierung eine Intervention eines Bedieners erfordert, und zu ihrer Deaktivierung eine Intervention des Bedieners erfordert, und wenigstens einer Funktion eines zweiten Typs von begrenzter Dauer, die zu ihrer Aktivierung eine Intervention eines Bedieners erfordert, aber so ausgelegt ist, daß sie automatisch deaktiviert wird, und dadurch gekennzeichnet, daß es bei jeder dieser Stationen umfaßt:
- Einrichtungen zum Generieren eines Aktivierungssignals eines ersten Typs, wenn eine Funktion des ersten Typs von unbegrenzter Dauer dieser Station vom Bediener angefordert wird, wenn sie zuvor inaktiv war,
- Einrichtungen zum Generieren eines Deaktivierungssignals, wenn eine zuvor aktive Funktion des ersten Typs dieser Station in den Ruhezustand geschaltet wird,
- Einrichtungen zum Generieren eines Aktivierungssignals eines zweiten Typs, wenn eine Funktion des zweiten Typs von begrenzter Dauer dieser Station vom Bediener angefordert wird, wenn sie zuvor inaktiv war,
- Einrichtungen zum Erfassen der von dieser Station generierten Aktivierungs- und Deaktivierungssignale,
- einen Rechner (5400), der ausgelegt ist, bei jeder Erfassung eines von dieser Station generierten Aktivierungssignals des ersten Typs um einen Schritt vorwärtsgeschaltet und bei jeder Erfassung eines von dieser Station generierten Deaktivierungssignals um einen Schritt rückwärtsgeschaltet zu werden,
- eine Zeitsperre (5500), die ausgelegt ist, bei jeder Erfassung eines von dieser Station generierten Aktivierungssignals des zweiten Typs initialisiert zu werden, und
- . Einrichtungen zum Generieren eines Signals zum Schalten dieser Station (S1 bis S4) in den Schlafzustand, wenn der Zähler (5400) einen Zählstand Null erreicht und zur gleichen Zeit die Zeitsperre (5500) aufgehört hat, sich zu ändern.

24. Netzwerk nach einem der Ansprüche 21 bis 23, dadurch gekennzeichnet, daß jede Station ferner Einrichtungen (500) zum Überwachen des Zustands der zugehörigen Ladungen umfaßt.

25. Netzwerk nach einem der Ansprüche 21 bis 24, dadurch gekennzeichnet, daß jede Station ferner eine Hilfszeitsperre umfaßt, die ausgelegt ist, beim Wecken der zugehörigen Station initialisiert zu werden, um das Generieren des Signals zum Schalten in den Schlafzustand vor dem Ablaufen einer bestimmten, diesem Wecken folgenden Frist zu sperren.

26. Netzwerk nach Anspruch 21, dadurch gekennzeichnet, daß jede Station ferner eine Hilfszeitsperre umfaßt, die ausgelegt ist, initialisiert zu werden, wenn der Zähler (5400) einen Zählstand Null erreicht, um das Generieren des Signals zum Schalten in den Schlafzustand vor dem Ablaufen einer bestimmten, dem Erreichen dieses Zustands folgenden Frist zu sperren.

27. Netzwerk nach Anspruch 23, dadurch gekennzeichnet, daß jede Station ferner eine Hilfszeitsperre umfaßt, die ausgelegt ist, initialisiert zu werden, wenn die Station das Erreichen des stabilen Zustands der Zeitsperre (5500) in Verbindung mit einem Zählstand Null im Zähler (5400) feststellt.

## Claims

1. A method of controlling a network of electronic stations each suitable for generating at least one function, in particular for motor vehicles characterized in that it comprises the following steps:
i) generating an activation signal at at least one of the stations when a request is made for a previously inactive function;
ii) generating a deactivation signal when a previously active function is to be deactivated;
iii) detecting the generated activation and deactivation signals;
iv) incrementing at least one counter (540, 5400) by one step each time an activation signal associated with the counter is detected;
v) decrementing the same counter (540, 5400) by one step each time an associated deactivation signal is detected; and
vi) generating a "go to sleep" signal (570, 5700) whenever a counter (540, 5400) reaches a zero count on being decremented.

2. A method according to claim 1, of controlling a network of electronic stations each suitable for generating at least one function, on particular for motor vehicles, in which at least some of the functions that the electronic stations of the network are suitable for generating are "wake-up" functions, characterized in that it comprises the following steps:
a) at at least some of the stations:
i) generating an activation signal when a previously inactive "wake-up" function is requested;
ii) generating a deactivation signal when an associated and previously active "wake-up" function is to be deactivated;
b) at at least one control station including a counter:
i) detecting the activation and deactivation signals generated by all of the stations;
ii) incrementing the counter (540) by one step each time an activation signal is detected;
iii) decrementing the same counter (540) by one step each time a deactivation signal is detected; and
iv) generating a "go to sleep" signal (570) for all of the stations (S1 to S4) when the counter (540) reaches a count of zero on being decremented.

3. A control method according to claim 2, characterized in that only one station (S1 to S4) in the network includes a counter (540) .

4. A control method according to one of claims 2 and 3, for controlling a network of electronic stations suitable for generating at least one "wake-up" function of a first type which is of unlimited duration and which requires an operator to activate it and an operator to deactivate it, and at least one "wake-up" function of a second type which is of limited duration and which requires an operator to activate it but which is designed to be deactivated automatically, characterized in that it comprises following steps:
a) at at least some of the stations:
i) generating an activation signal of a first type when an associated and previously inactive unlimited duration "wake-up" function of the first type is requested by the operator;
ii) generating a deactivation signal when an associated and previously active "wake-up" function of the first type is to be deactivated;
iii) generating an activation signal of a second type when an associated and previously inactive limited duration "wake-up" function of the second type is requested by the operator ;
b) and at at least one control station including a counter and a timer:
i) detecting the activation and deactivation signals generated by all of the stations;
ii) incrementing the counter (540) by one step each time a deactivation signal of the first type is detected;
iii) decrementing the same counter (540) by one step each time a deactivation signal is detected;
iv) initializing the timer (550) each time an activation signal of the second type is detected; and
v) generating a "go to sleep" signal for all of the stations (S1 to S4) when the counter reaches a count of zero and simultaneously the timer (550) is not timing.

5. A method according to one of claims 2 to 4, characterized in that it includes a step of preventing a "go to sleep" signal being generated until after a determined time period has elapsed after the stations have been "woken up" .

6. A method according to claim 2, characterized in that it includes a step of preventing a "go to sleep" signal being generated until after a determined time period has elapsed after the counter (540) has decremented to the zero state.

7. A method according to claim 4, characterized in that it includes a step of preventing a "go to sleep" signal being generated until after a determined time period has elapsed after detecting that the timer (550) has reached a stable state in association with the counter (540) being at a count of zero.

8. A control method according to claim 1, characterized in that it comprises the following steps at each station:
i) generating an activation signal when a previously inactive function of the station is requested;
ii) generating a deactivation signal when a previously active function of the station is to be deactivated;
iii) detecting the activation and deactivation signals generated by said station;
iv) incrementing a counter (5400) incorporated in the station by one step each time an activation signal generated by said station is detected;
v) decrementing the same counter (5400) by one step each time a deactivation signal generated by said station is detected; and
vi) generating a "go to sleep" signal (5700) for said station (S1 to S4) when the counter (540) reaches a count of zero on being decremented.

9. A control method according to claim 8, for a network of electronic stations in which at least some of the stations are suitable for generating at least one function of a first type which is of unlimited duration and which requires an operator to activate it and an operator to deactivate it, and at least one function of a second type which is of limited duration and which requires an operator to activate it, but which is designed to be deactivated automatically, characterized in that it comprises the following steps at each of the stations:
generating an activation signal of a first type when a previously inactive unlimited duration function of the first type is requested of the station by the operator;
generating a deactivation signal when a previously active function of the first type of said station is to be deactivated;
generating an activation signal of a second type when a previously inactive limited duration function of the second type is requested of the station by the operator;
detecting the activation and deactivation signals generated by said station;
incrementing the counter (5400) incorporated in said station by one step each time an activation signal of the first type generated by said station is detected;
decrementing the same counter (5400) by one step each time a deactivation signal generated by said station is detected;
initializing a timer (550) incorporated in said station each time an activation signal of the second type generated by said station is detected; and
generating a "go to sleep" signal for said station (S1 to S4) whenever the counter reaches a count of zero and simultaneously the timer (550) is not timing.

10. A method according to one of claims 8 or 9, characterized in that it includes a step of preventing a "go to sleep" signal being generated until after a determined time period has elapsed after the associated station has been "woken up".

11. A method according to claim 8, characterized in that it includes a step of preventing a "go to sleep" signal being generated until after a determined time period has elapsed after the counter (5400) has decremented to the zero state.

12. A method according to claim 9, characterized in that it includes a step of preventing a "go to sleep" signal being generated until after a determined time period has elapsed after detecting that the timer (5500) has reached a stable state is association with the counter (5400) being at a count of zero.

13. A network of electronic stations each suitable for generating at least one function, in particular for motor vehicles, characterized in that it comprises at least at some stations:
means suitable for generating an activation signal when an associated and previously inactive function is requested;
means suitable for generating a deactivation signal when an associated and previously active function is to be deactivated;
means suitable for detecting the generated activation and deactivation signals;
a counter (540,5400) designed to be incremented by one step each time an associated activation signal is detected and to be decremented by one step each time an associated deactivation signal is detected; and
means suitable for generating a "go to sleep" signal each time a counter (540,5400) reaches a zero count on being decremented.

14. A network according to claim 13, characterized in that it comprises:
a) at at least some of the stations:
means suitable for generating an activation signal when an associated and previously inactive "wake-up" function is requested;
means suitable for generating a deactivation signal when an associated and previously active "wake-up" function is to be deactivated;
b) at at least one control station:
means suitable for detecting the activation and deactivation signals generated by all of the stations;
a counter (540) designed to be incremented by one step each time an activation signal is detected and to be decremented by one step each time a deactivation signal is detected ; and
means suitable for generating a "go to sleep" signal for all of the stations (S1 to S4) when the counter (540) reaches a zero count on being decremented.

15. A network according to claim 14, characterized in that the various stations of the network are interconnected by a transmission bus (10), and only one of the stations (S1 to S4) in the network includes a counter (540).

16. A network according to one of claims 14 and 15, comprising stations suitable for generating at least one "wake-up" function of a first type which is of unlimited duration and which requires an operator to activate it and an operator to deactivate it, and at least one "wake-up" function of a second type which is of limited duration and which requires an operator to activate it but which is designed to be deactivated automatically, characterized in that it comprises:
a) at at least some of the stations:
means suitable for generating an activation signal of a first type whenever an associated and previously inactive unlimited duration "wake-up" function of the first type is requested by an operator;
means suitable for generating a deactivation signal whenever an associated and previously active "wake-up" function of the first type is to be deactivated;
means suitable for generating an activation signal of a second type whenever an associated and previously inactive limited duration "wake-up" function of the second type is requested by the operator;
b) at at least one control station:
means suitable for detecting the activation and the deactivation signals generated by all of the stations;
a counter (540) designed to be incremented by one step each time an activation signal of the first type is detected and to be decremented by one step each time a deactivation signal is detected;
a timer (550) designed to be initialized each time an activation signal of the second type is detected; and
means suitable for generating a "go to sleep" signal for all of the stations (S1 to S4) whenever the counter (540) reaches a zero count and simultaneously the timer (550) is not timing.

17. A network according to one of claims 14 to 16, characterized in that each station further includes means (500) suitable for monitoring the state of the associate loads.

18. A network according to one of claims 14 to 17, characterized in that the control station further includes an auxiliary timer designed to be initialized when the stations are "woken up" in order to prevent a "go to sleep" signal being generated before a determined time period has elapsed after "waking up".

19. A network according to claim 14, characterized in that the control station further includes an auxiliary timer designed to be initialized whenever the counter (540) reaches a zero count in order to prevent the "go to sleep" signal being generated until after a determined time period has elapsed following said state being reached.

20. A network according to claim 16, characterized in that the control station further includes an auxiliary timer designed to be initialized when the station detects that the timer (550) has reached a stable state and there is a zero count in the counter (540).

21. A network according to claim 13, characterized in that it comprises at each station:
means suitable for generating an activation signal when a previously inactive function of the station is requested; means suitable for generating a deactivation signal when a previously active function of said station is to be deactivated;
means designed to detect the activation and deactivation signals generated by said station;
a counter (5400) designed to be incremented by one step each time an activation signal is detected and to be decremented by one step each time a deactivation signal is detected; and
means suitable for generating a "go to sleep" signal for said station (S1 to S4) whenever the counter (5400) reaches a zero state on being decremented.

22. A network according to claim 21, characterized in that the various stations of the network are interconnected by a transmission bus (10).

23. A network according to one of claims 21 or 22, characterized in that the network comprises stations suitable for generating at least one function of a first type which is of unlimited duration and which requires an operator to activate it and an operator to deactivate it, and at least one function of a second type which is of limited duration and which requires an operator to activate it, but which is designed to be deactivated automatically, the network comprising at each of its stations :
means suitable for generating an activation signal of a first type when a previously inactive unlimited duration function of the first type of said station is requested by the operator;
means suitable for generated a deactivation signal when a previously active function of the first type of said station is to be deactivated;
means suitable for generating an activation signal of the second type whenever a previously inactive limited duration function of the second type of said station is requested by the operator;
means suitable for detecting the activation and deactivation signals generated by said station;
a counter (5400) designed to be incremented by one step each time an activation signal of the first type generated by said station is detected and to be decremented by one step each time a deactivation signal generated by said station is detected;
a timer (5500) designed to be initialized each time an activation signal of the second type generated by said station is detected; and
means suitable for generating a "go to sleep" signal for said station (S1 to S4) when the counter (5400) reaches a zero state and simultaneously the timer (5500) is not timing.

24. A network according to one of claims 21 to 23, characterized in that each station further includes means (500) suitable for monitoring the state of the associated loads.

25. A network according to one of claims 21 to 24, characterized in that each station further includes an auxiliary timer designed to be initialized when the associated station is "woken up" in order to prevent a "go to sleep" signal being generated before a determined time period has elapsed after "waking up".

26. A network according to claim 21, characterized in that each station further includes an auxiliary timer designed to be initialized when the counter (5400) reaches a zero count in order to prevent a "go to sleep" signal being generated before a determined time period has elapsed following said state being reached.

27. A network according to claim 23, characterized in that further includes an auxiliary timer designed to be initialized when the station detects that the timer (5500) has reached a stable state in association with a zero count in the counter (5400).
